Europäisches Patentamt

European Patent Office

Office européen des brevets

(11) Veröffentlichungsnummer: **0 407 340 A1**

## (12) EUROPÄISCHE PATENTANMELDUNG

(21) Anmeldenummer: **90810473.0**

(22) Anmeldetag: **22.06.90**

(51) Int. Cl.⁵: **B24B 23/00**, B29C 37/00, F16L 47/02

(30) Priorität: **06.07.89 CH 2516/89**

(43) Veröffentlichungstag der Anmeldung:
**09.01.91 Patentblatt 91/02**

(84) Benannte Vertragsstaaten:
**AT CH DE FR IT LI NL**

(71) Anmelder: **Geberit AG**
**Schachenstrasse 77**
**CH-8645 Jona(CH)**

(72) Erfinder: **Häsler, Heinz**
**Oberseestrasse 90**
**CH-8645 Jona(CH)**

(74) Vertreter: **Groner, Manfred et al**
**Patentanwalts-Bureau Isler AG**
**Walchestrasse 23**
**CH-8006 Zürich(CH)**

(54) **Vorrichtung zur Bearbeitung eines mit einer Schweissmuffe zu verbindenden Rohres.**

(57) In einem Halter (4) ist ein Schleifring (3) lösbar aber drehfest angeordnet. Mit der Bohrmaschine (2) kann der Halter (4) mit dem eingelegten Schleifring (3) sowie eine Führung (1a) rotiert werden. Um die zu verschweissende Aussenfläche eines Kunststoffrohres (5) oder Formstücks zu reinigen, wird der Schleifring (3) rotierend auf das Rohr (5) aufgeschoben, wobei die Mantelfläche des Rohres (3) aufgerauht wird. Beim Abziehen des Halters (4) verbleibt der Schleifring (3) in einem bestimmten Abstand zur Rohrmündung auf dem Rohr (5) und dient als Anschlag für die auf das Rohr (5) aufzuschiebende Elektroschweissmuffe.

Fig. 1

EP 0 407 340 A1

## VORRICHTUNG ZUR BEARBEITUNG EINES MIT EINER SCHWEISSMUFFE ZU VERBINDENDEN ROHRES

Die Erfindung betrifft eine Vorrichtung nach dem Oberbegriff des unabhängigen Patentanspruchs 1.

Schweissmuffen und insbesondere Elektroschweissmuffen haben eine weite Verwendung zur kraftschlüssigen und unlösbaren Verbindung von Rohren und Formstücken gefunden. Damit die Schweissmuffe sich mit dem thermoplastischen Kunststoff des Rohres verbindet und eine dichte Verbindung erreicht wird, muss die zu schweissende Oberfläche gereinigt werden. Dies gilt auch für Formstücke, die untereinander oder mit Rohren verbunden werden sollen. Bisher wurden dazu die genannten Oberflächen von Hand mit einem Messer, einem Schaber oder einer Ziehklinge oder auch mit einem grobkörnigen Glaspapier bearbeitet. In allen Fällen ist dies aufwendig und birgt Gefahr, dass die Oberfläche ungleichmässig oder sogar nur teilweise gereinigt wird. Daraus resultiert oft eine undichte Verbindung.

Der Erfindung liegt die Aufgabe zugrunde, eine Vorrichtung der genannten Art zu schaffen, welche die genannten Nachteile vermeidet. Die Aufgabe wird durch die Erfindung gemäss Anspruch 1 gelöst.

Die Erfindung ermöglicht eine maschinelle und somit schnellere und präzisere Bearbeitung der zu verschweissenden Rohr- und Formstückoberflächen. Der Ring kann auf dem Rohr bzw. Formstück verbleiben und einen Anschlag für die aufzuschiebende Schweissmuffe bilden. Damit wird sichergestellt, dass die gesamte zu verschweissende Oberfläche gereinigt wird. Ein weiterer wesentlicher Vorteil besteht darin, dass ein bisher üblicher Anschlag im Innern der Schweissmuffe wegfallen kann, was die Herstellung der Schweissmuffe vereinfacht. Als Antrieb kann eine handelsübliche Bohrmaschine verwendet werden, denkbar ist jedoch auch ein Handantrieb. Wird der Ring gleichzeitig als Anschlag für die aufgeschobene Schweissmuffe verwendet, so ist eine einfache Ueberprüfung der Einstecktiefe möglich. Der Ring lässt sich besonders kostengünstig und einfach als kunststoffgebundener Schleifring herstellen.

Die Erfindung betrifft auch eine Schweissmuffenverbindung, die insbesondere mit Hilfe einer Vorrichtung nach Anspruch 1 hergestellt worden ist.

Ein Ausführungsbeispiel der Erfindung wird nachfolgend anhand der Zeichnung näher erläutert. Es zeigen:

Fig. 1 eine Schnittansicht einer erfindungsgemässen Vorrichtung und ein teilweise geschnittenes Rohrstück,

Fig. 2 ein teilweise geschnittenes Rohrstück mit aufgesetztem Ring,

Fig. 3 eine Schnittansicht eines Rohrstückes mit aufgesetztem Ring und aufgeschweisster Schweissmuffe, und

Fig. 4 eine perspektivische Ansicht eines Ring.

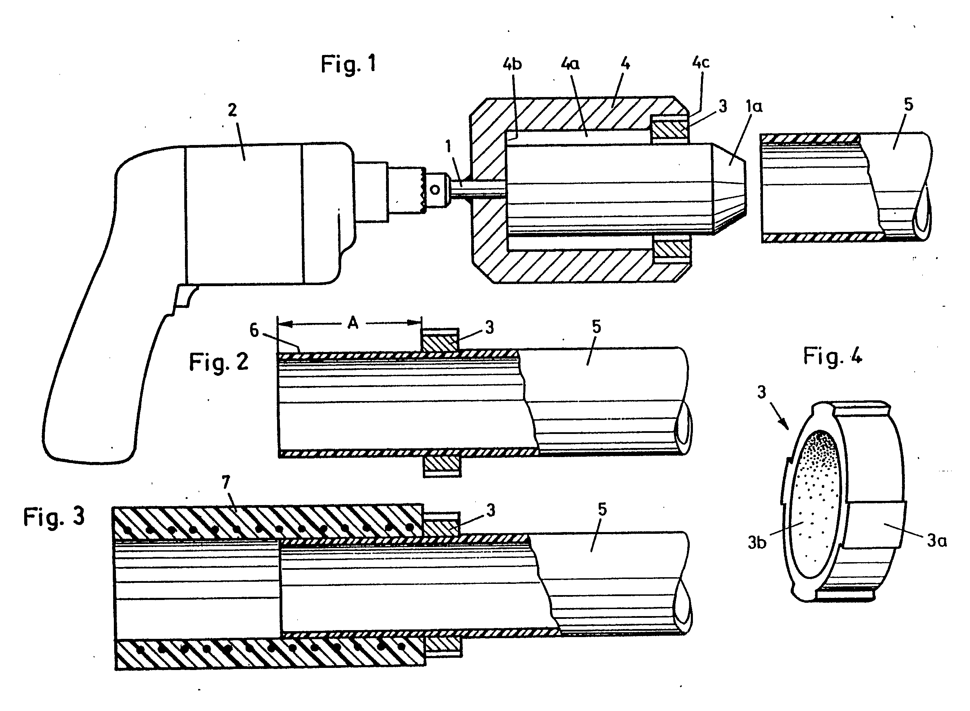

Wie die Fig. 1 zeigt, weist die erfindungsgemässe Vorrichtung eine Bohrmaschine 2 auf, in deren Bohrfutter ein Werkzeugeinsatz mit einem Schaft 1 befestigt ist. Mit dem Schaft 1 ist fest ein Halter 4 verbunden, an dem löbar ein Schleifring 3 befestigt ist. Der vorzugsweise kunststoffgebundene Schleifring 3 besitzt gemäss Fig. 4 eine kreisrunde Innenfläche 3b sowie auf der Aussenseite Mitnehmernocken 3a, die in entsprechende Nuten des Halters 4 eingreifen. Der zylindrisch und koaxial mit dem Schaft 1 verbundene Halter 4 besitzt eine Ausnehmung 4a, in welcher der Schleifring 3 sowie eine Führung 1a, die fest mit Schaft 1 verbunden ist, aufgenommen sind. Die vorn aus der Ausnehmung 4a herausragende Führung 1a besitzt eine zylindrische Mantelfläche 1b, deren Durchmesser an den Innendurchmesser des zu verbindenden Rohres 5 derart angepasst ist, dass die Führung 1a rotierend in das Rohr 5 eingeschoben werden kann. Der Innendurchmesser des Ringes 3 ist hingegen geringfügig kleiner als der Aussendurchmesser des Rohres 5. Wird nun die Führung 1b in das Rohr 5 eingeschoben, so schleift der koaxial mitdrehende Ring 3 mit seiner Innenfläche 3b die Mantelfläche des Rohres 5 ab. Die Führung 1a wird rotierend soweit in das Rohr 5 eingeschoben, bis die Mündung des Rohres an einer Anschlagfläche 4b des Halters 4 anstösst.

Wird nun die Führung 1a aus dem Rohr 5 herausgezogen, so bleibt der Ring 3 festgeklemmt auf dem Rohr 5 sitzen, wie dies in Fig. 2 gezeigt ist. Die hier markierte Strecke A entspricht nun der Länge der gereinigten und bearbeiteten Fläche 6 und zugleich der Einstecktiefe. Die Durchmesserreduktion des Rohres 5 ist hier aus Gründen der Darstellung grösser als üblich gezeichnet. In der Regel genügt ein leichtes aufrauhen der Oberfläche 6. Denkbar ist jedoch auch, dass vergleichsweise starke und nicht mehr thermoplastische Kunststoffschichten abgetragen werden müssen. Um das in Fig. 2 gezeigte Rohr 5 mit einer Elektroschweissmuffe 7 zu verbinden, wird diese wie in Fig. 3 gezeigt soweit auf das Rohr aufgeschoben, bis diese am festgeklemmten Ring 3 anstösst. In der Regel wird von der anderen Seite in die Elektroschweissmuffe 7 ein hier nicht gezeigtes zweites Rohr oder ein Formstück eingeschoben. Dieses zweite Rohr bzw. Formstück ist ebenfalls wie erläutert bearbeitet worden und trägt ebenfalls als Anschlag einen Ring 3 in entsprechender Tiefe A. Die Tiefe A, die durch den Anschlag 4b bestimmt ist, entspricht somit in der Regel der halben Länge einer Schweissmuffe 7. Die Schweissmuffe 7 wird nun in üblicher Weise an einer Stromquelle angeschlossen und mit den Rohren bzw. Formstücken verbunden. Der Ring 3 bzw. die Ringe 3 können auf den verbundenen Rohren verbleiben oder können zerstört und abgenommen werden.

Der Ring 3 ist vorzugsweise ein kunststoffgebundener Schleifring mit Korund im Bereich der Innenfläche 3b. Die Innenfläche 3b kann zylindrisch oder radial nach innen gewölbt sein. Denkbar ist auch ein Ring 3, der die Manteloberfläche des Rohres 5 nicht abschleift, sondern beispielsweise abhobelt.

Ein auf dem Rohr 5 verbleibender Ring 3 wird durch einen neuen Ring ersetzt, der in die Ausnehmung 4a eingelegt wird. Denkbar ist auch eine Variante, bei welcher der Ring 3 oder ein ähnlich wirkendes Werkzeug fest mit dem Werkzeugeinsatz verbunden ist. Für diese Ausführung ist dann jedoch ein entsprechender Anschlagring im Inneren der Schweissmuffe notwendig.

**Ansprüche**

1. Vorrichtung zur Bearbeitung eines mit einer Schweissmuffe zu verbindenden Rohres (5) oder Formstückes, gekennzeichnet durch einen mit einem Antrieb (2) um seine Rotationsachse drehbaren Ring (3), der eine Innenfläche (3b) aufweist, mit welcher das Rohr (5) bzw. das Formstück im Bereich der Oberfläche die geschweisst werden soll aufgerauht oder abgearbeitet werden kann.

2. Vorrichtung nach Anspruch 1, dadurch gekennzeichnet, dass der Ring (3) lösbar am Antrieb (2) befestigt ist.

3. Vorrichtung nach Anspruch 1 oder 2, dadurch gekennzeichnet, dass der Ring ein Schleifring ist.

4. Vorrichtung nach einem der Ansprüche 1 bis 3, dadurch gekennzeichnet, dass der Ring (3) auf einem Werkzeugeinsatz (1,4) befestigt ist und dieser Einsatz eine in das Rohr (5) bzw. in das Formstück einzuschiebende Führung (1a) zur koaxialen Ausrichtung des Ringes (2) zum Rohr (5) bzw. Formstück aufweist.

5. Vorrichtung nach einem der Ansprüche 1 bis 4, dadurch gekennzeichnet, dass der Einsatz einen Halter (4) aufweist, der eine Ausnehmung (4a) besitzt, in welche der Ring (3) eingesetzt und in die ein Ende des Rohrs (5) bzw. Formstücks einschiebbar ist.

6. Vorrichtung nach einem der Ansprüche 1 bis 5, dadurch gekennzeichnet, dass der Ring (3) Mitnehmernocken (3a) oder Mitnehmernuten zu seiner lösbaren Befestigung am Antrieb bzw. Werkzeugeinsatz (1,4) aufweist.

7. Vorrichtung nach einem der Ansprüche 1 bis 6, dadurch gekennzeichnet, dass der Ring (3) ein kunststoffgebundener Schleifring ist.

8. Vorrichtung nach einem der Ansprüche 4 bis 7, dadurch gekennzeichnet, dass der Werkzeugeinsatz (1,4) einen Anschlag (4b) aufweist, welcher die Einstecktiefe des Rohres (5) bzw. Formstücks in den Einsatz (1) bestimmt.

9. Schweissmuffenverbindung, zu deren Herstellung insbesondere eine Vorrichtung nach Anspruch 1 verwendet worden ist, gekennzeichnet durch wenigstens einem auf das Rohr (5) bzw. Formstück aufgeschobenen Ring (3), der einen Anschlag für die Schweissmuffe (7) bildet, wobei der Innendurchmesser des Rings (3) so bemessen und ausgebildet ist, dass er bei seinem rotierenden Aufschieben auf das Rohr (5) bzw. Form stück dieses an seiner Aussenfläche aufrauht oder teilweise abarbeitet.

10. Schweissmuffe nach Anspruch 1, dadurch gekennzeichnet, dass der Ring (3) ein Schleifring ist.

Fig. 1

Fig. 2

Fig. 3

Fig. 4

## EINSCHLÄGIGE DOKUMENTE

EP 90810473.0

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| A | DD - A1 - 248 085 (REICHSBAHN) * Fig. * -- | 1 | B 24 B 23/00 B 29 C 37/00 F 16 L 47/02 |
| A | AT - B - 366 805 (DYNAMIT NOBEL) * Fig. * -- | 9 | |
| A | EP - A1 - 0 060 448 (HENKEL) * Zusammenfassung * ---- | 9 | |

|  |  |
|---|---|
|  | RECHERCHIERTE SACHGEBIETE (Int Cl⁵) |
|  | B 24 B B 29 C F 16 L |

Der vorliegende Recherchenbericht wurde für alle Patentansprüche erstellt.

| Recherchenort | Abschlußdatum der Recherche | Prüfer |
|---|---|---|
| WIEN | 17-08-1990 | KREHAN |